# EUROPEAN PATENT APPLICATION

(11) **EP 0 997 649 A2**
(43) Date of publication of application: **03.05.2000**
(21) Application number: 99203560.0
(22) Date of filing: 28.10.1999
(51) Int. Cl.: F16B 2/08, F16L 33/02

(54) **Constriction ring**

(30) Priority: 30.10.1998 ES 9802389
(71) Applicant: MIKALOR, S.A., 08205 Sabadell (Barcelona) (ES)
(72) Inventor: Dominiguez, Palau, 08205 Sabadell (ES)
(74) Representative: Canela Giménez, Teresa

(57) **Abstract**

Constricting ring, of the type which consist of a metallic strip, rolled up onto itself and with closure of its free ends by dovetailing, which has the feature that in order to obtain a convergent reaction of the laterals of the profiled deep indentation of the female end of the ring towards the edges of the male element, in the central part of the head of said male end of the constriction means there is provided a gully from which emerges the central engagement stem, for which the lateral sections of the head of said end which are located on the right and left of the start of the central stem are arranged at an acute, blunt angle, each section of said head and the outer ends of the transverse line being advanced in relation to the location of the central gully.

## Description

The subject of the present invention relates to a constricting ring.

At present, the rings for constriction of a resilient flexible tube which may contain longitudinally a bundle of cables which have to be installed in narrow places which are difficult of access from the outside, cannot have projecting closure means, since their projection renders more difficult the installation of the rings in the apparatus or machine for which they are intended, as also occurs with clamping rings for rubber hoses which convey water to the radiator circuit of motor vehicles.

To facilitate said installation, rings are suitable which consist of a metallic, flexible strip, rolled up on itself, the closure of which is obtained by engagement of its opposed ends, butted together, and dovetailed with one another. This is the case in German Patent No. 887 835 of Gerhard Grzanka, applied for on the 8th of July 1949.

In this patent it was claimed that in the central part of the head of one end of the strip it is provided with an extension which projects perpendicularly from the transverse edge of said head, the periphery of which projection has re-entrants in the form of successive alternating indentations and protuberances.

The head of the opposed end of the same metallic strip which forms the constricting ring, at the level of the projection, has a deep, central, perpendicular indentation which constitutes the female element, which coincides with the shape and position of the projection constituting the male element described previously.

Therefore its perimeter is likewise provided with the successive, alternating re-entrants and protuberances, so that when the strip is rolled up onto itself in order to convert it into a constricting strap, both heads come opposite each other and the protuberances of one penetrate and fit into the re-entrants of the other, alternately, forming the closure by dovetailing.

However, this closure, thus obtained, is not perfect, owing to the high tensile forces to which metallic rings of this type are subjected.

In order to endeavour to remedy the imperfections in the closure of such rings, the subject of French Patent No. 90 04768 of Hans Oetiker AG was registered, with Swiss priority of the 4th April 1989.

The latter consists in providing, instead of a single male element with its corresponding female element of the metallic strap, at least two male elements, and in the opposed head of the same metallic strap, two coincident female elements.

Nor has this solution given the desired results of resistance to traction, since it is necessary not to forget the strong tensions to which said rings are subjected during their closure enclosing the rubber inlet hose or outlet hose which are coupled to the respective connections of the radiator.
The more indentations are provided in the female head of the metallic ring, the weaker said area becomes.

In order to endeavour to reduce the aforesaid weakening in this type of constricting rings with two deep indentations in the female head, in German Patent No. 40 21 746, of GKN Automotive AG, a greater length was given to each of the laterals of the two head parts of the male elements by means of respective diagonal, descending cuts, at a sharp angle, which start in the lower righthand edge of the shaft of each head part and descend towards the outer edge of the respective laterals, without touching them, of the male end of the metallic ring which forms the closure and thereby obtain a claimed improved deep grip.

This embodiment has the drawback that the sharp-angled diagonal cuts completely sharpen the ends of said extensions, weakening them, and owing to their fragility and natural reaction of the material of which they are composed, they tend, as a reaction, to arch upwards, separating from the remainder of their parts which are coupled. The aforesaid pointed ends act as barbs, and during the process of compression to effect the closure of the laminar ring, under load, any of the said sharpened points may damage the dust-guard bellows, compromising the leaktightness necessary in the homokinetic joint.

Hence in said patent 40 21 746 of GKN Automotive AG there continue to be applied the weld points already used in the manufacture of this type of constricting strap inclusively with priority to German Patent No. 40 09 259 of Hans Oetiker AG Maschinen- und Apparatefabrik.

But this practical embodiment is not convincing, since with it the weakening of the female head is continued by its containing the two deep parallel indentations. German Patent No. 40 21 746 of GKN Automotive AG continues with the multiple engagement of two head parts of the German Patent No. 40 09 259 of Hans Oetiker AG, but coming back to placing a single shaft of German Patent No. 887 835 Grzanka with the two head parts in line, and providing in each head part those sharpened extensions of its laterals.

The arrangement of the previously mentioned extended points, in addition to the problems already listed, has the drawback that the critical area which receives the greatest tensile force of the ring under load, when closed, which is the area contained between the straight transverse line of the head of the end of the ring and the descending extended sharpened end of each head part, is shortened so that there is created a weakness for resisting the high stresses to which the metallic ring is subjected.

Also with this shortening, the start of the first section of the neck of the shaft is unduly narrowed, creating a narrow area there which, because of its narrowness, renders more difficult the correct operations of assembly of the two parts, male and female.

In order to eliminate the aforesaid shortening, recourse is also made in German Patent 40 21 746 GKN to widening said critical area by modifying the straight transverse line of the male end of the metallic ring, with two inclined descending planes directed towards the outside of said shaft and formed by two opposed obtuse sharp angles.

Corresponding to the shape of the deep central indentation of the female element, the latter has, starting from its inner edge, the inclined planes, in ascending form complementary to the descending inclined planes of the male element.

It determines that the inclined planes, descending towards the edges of the laterals on the end of the male element and the inclined planes ascending towards the lateral edges of the female end naturally have a tendency, when the male element is introduced, to open, the laterals of the mouth of the female element separating, and for the latter to escape.

The result of all this is that the variations in detail of the dovetailing of the above-mentioned rings do not entirely solve the problems encountered with metallic straps.

In order solve the problems listed above, the subject of the invention has been created.

For a correct interpretation of the subject thereof a practical embodiment is described hereinafter by way of non-limiting example, accompanied by a sheet of drawings, of the new metallic strap in which:
Figure 1 shows, separated, the two ends of the metallic strip abutting each other and which constitute the constricting ring, and
Figure 2 shows the same ends of the constricting ring in Figure 1, already dovetailed.

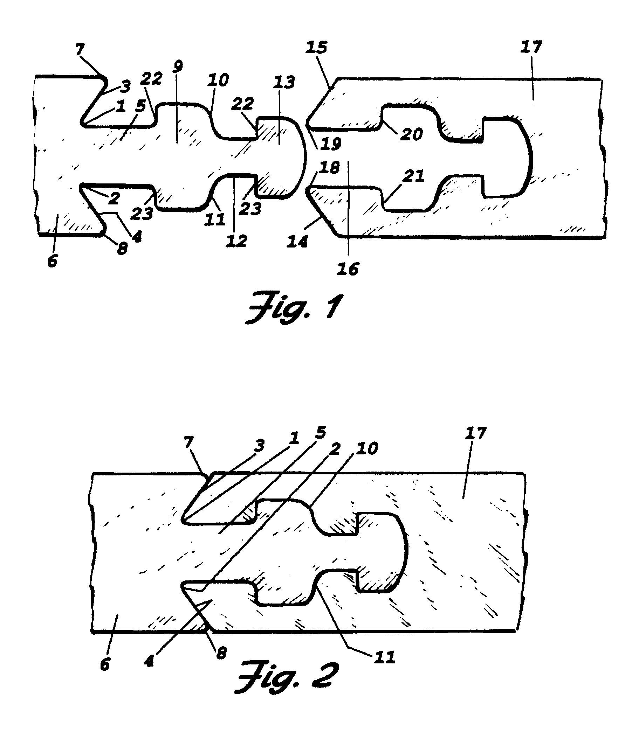

The invention consists in the arrangement at acute, blunt angles (1 and 2) of the transverse line (3 and 4) where the forward laminar extension (5) starts which is the male element of one end (6) of the metallic ring, in order to provide a central gully formed by the acute, blunt angles (1 and 2) and the convergent planes (3 and 4) of said transverse line, and thus obtain the result that this central starting point of the central shaft (5) is situated at a level below that of the blunt ends (7 and 8) of the convergent sections (3 and 4) of that same line, and achieve the effect that the outer blunt ends (7 and 8) of said head line are advanced towards the first rectangular head part (9) and separated from it.

The outer edges (10 and 11) of the rectangular head part (9) are inclined in a sinusoidal shape so as to merge with the section (12) of the upper head part (13).

For the perfect fit to be obtained, the outer edges (14 and 15) of the deep indentation (16) of the female element (17) are of coincident shape, and therefore also inclined in a convergent direction towards the central part thereof, and end in respective acute, blunt angles (18 and 19).

This geometry means that when the tensile force is exerted in the longitudinal direction of the closed ring, the straight inner shoulders (20 and 21) of the first section of the deep central indentation (16) which are engaged with the lower shoulders (22 and 23) of each head part (9) oblige the straight laterals. (14 and 15) separated from each other to come closer to one another, and the forward blunt ends (18 and 19) to engage with greater intensity in the blunt angles (1 and 2) of the male element (6), avoiding the weakening of the area and the creation of the sharpened points, a very robust closure being obtained.

Apart from the advantages described, with the subject of the invention it is possible to obtain by means of the geometry of its stamping punches a greater robustness thereof and to facilitate the rectifying operations and reduce their number.

As a consequence thereof, the possibility of burrs occurring on the edges of the part obtained is avoided.

During the assembly process (compression load) it is less, the movements in the opening direction being suppressed and the tendency to destruction of the clipping of the ring are less than in those rings of the Patent registrations cited.

Consequently, the robustness of the constricting ring is also greater during manipulation for its use by the user of the ring.

It is to be understood that in the present case any details of construction and finish which do not alter, change or modify the essence of the invention may be varied.

## Claims

1. Constricting ring, of the type which consist of a metallic strip, rolled onto itself, and with closure of its free ends by dovetailing when the male element with multiple head part emerging from one of its heads faces and penetrates into the deep indentation of like shape provided in the female head of the opposed end, characterized in that in order to obtain a convergent reaction of the laterals of the profiled deep indentation of the female end of the ring towards the edges of the male element, in the central part of the head of said male end of the constricting means there is provided a gully from which emerges the central engagement stem, for which the lateral sections of the head of said end which are located on the right and left of the start of the central stem are arranged at an acute, blunt angle, each section of said head and the outer ends of the transverse line being advanced in relation to the location of the central gully.

2. Constricting ring, according to the preceding claim, characterized in that the straight line of the upper major side of the head part merges with the respective edge of the central stem by means of a sinusoidal line.

3. Constricting ring, according to the preceding claims, characterized in that the edges of the angles of the point of the mouth of the deep indentation of the female element are inclined convergently towards the centre, without reaching the latter.
